# EUROPÄISCHE PATENTSCHRIFT

(11) **EP 1 581 751 B1**
(45) Veröffentlichungstag und Bekanntmachung des Hinweises auf die Patenterteilung: **25.10.2006**
(21) Anmeldenummer: 03785913.9
(22) Anmeldetag: 22.12.2003
(51) Int. Cl.: F16D 55/228

(54) **SCHEIBENBREMSE MIT ELEKTROMOTORISCHER NACHSTELLUNG**
ELECTROMOTIVELY ADJUSTED DISK BRAKE
FREIN A DISQUE AJUSTE PAR MOTEUR ELECTRIQUE

(30) Priorität: 02.01.2003 DE 10300013
(43) Veröffentlichungstag der Anmeldung: 05.10.2005
(73) Patentinhaber: KNORR-BREMSE SYSTEME FÜR NUTZFAHRZEUGE GMBH, 80809 München (DE)
(72) Erfinder: BIEKER, Dieter, 83080 Oberaudorf (DE); BAUMGARTNER, Johann, 85368 Moosburg (DE); TRIMPE, Robert, 82234 Wessling (DE)
(74) Vertreter: Mattusch, Gundula
(86) Internationale Anmeldenummer: PCT/EP2003/014726
(87) Internationale Veröffentlichungsnummer: WO 2004/061324

(56) Entgegenhaltungen:
- WO-A-02/14125
- WO-A-91/19115
- DE-A- 10 252 301

## Beschreibung

Die Erfindung betrifft eine pneumatisch oder elektromotorisch betätigte Scheibenbremse nach dem Oberbegriff des Anspruchs 1.

Eine derartige Scheibenbremse ist aus der WOPCT/EP 01/09370 derselben Anmelderin bekannt. In dieser Schrift sind jeweils im Bremssattel zwei Nachstellvorrichtungen auf beiden Seiten der Bremsscheibe angeordnet. Nach einer der offenbarten Varianten werden die auf der der Zuspannvorrichtung gegenüberliegenden Seite der Bremsscheibe angeordneten zwei Nachstellvorrichtungen von einem Transmissions- und Synchronisationsgetriebe nach Art einer flexiblen Welle angetrieben, welches seitlich im Bremssattel um die Bremsscheibe herumgeführt ist.

Diese Anordnung hat sich zwar an sich bewährt. Sie soll hier unter Einsatz elektromotorischer Antrieb für die Nachstellvorrichtungen weiter konstruktiv optimiert werden. Die Lösung dieses Problems ist die Aufgabe der Erfindung.

Diese Aufgabe löst die Erfindung durch den Gegenstand des Anspruchs 1.

Danach werden sämtliche Nachstellvorrichtungen auf beiden Seiten der Bremsscheibe von zwei Elektromotoren gemeinsam angetrieben, wobei die zwei Elektromotoren relativ zur Bremsscheibenebene auf einer gemeinsamen Seite des Bremssattels angeordnet sind. Es ist ein Transmissions- und/oder Synchronisationsgetriebe zwischen der wenigstens einen Nachstellvorrichtung auf der der Zuspannvorrichtung gegenüberliegenden Seite der Bremsscheibe - also der Reaktionsseite - und den - zuspannseitigen - Elektromotoren vorgesehen und die Elektromotoren zum Antrieb der Nachstellvorrichtungen sind vorzugsweise außerhalb des Bremssattels angeordnet.

Die Variante mit zwei Elektromotoren - geeignet sind z.B. EC-Motoren - bringen den Vorteil mit sich, dass kein Elektromotor nahe zur Bremsscheibe auf der von der Zuspannvorrichtung abgewandten Seite der Bremsscheibe angeordnet werden muss.

Dabei hat die bisher noch nicht bekannte Ausgestaltung mit zwei gemeinsamen Elektromotoren auf nur einer Seite der Bremsscheibe, von denen einer direkt das Transmissionsgetriebe treibt, den Vorteil, dass sich die einzelnen Elektromotoren kleiner dimensionieren lassen als beim Einsatz nur eines einzigen Motors, der sämtliche Nachstellvorrichtungen gemeinsam antreiben muss. Die Synchronisation der Nachstellvorrichtungen auf beiden Seiten der Bremsscheibe wird in diesem Fall über ein geeignetes Steuer- und/oder Regelprogramm realisiert. Besonders vorteilhaft ist dabei die Option und Auslegung der Steuervorrichtung derart, dass eine getrennte Ansteuerbarkeit der Nachstellvorrichtungen auf den beiden Seiten der Bremsscheibe zur Gewährleistung unsynchroner Funktionen, z.B. zur Reinigung der Bremsscheibe, möglich ist.

Besonders bevorzugt sind zur Gewährleistung möglichst gleichmäßigen Bremsbelagverschleißes auf jeder Seite der Bremsscheibe jeweils zwei miteinander synchronisierte Nachstellvorrichtungen angeordnet, die jeweils aus Hülse und Gewindespindel bestehen.

Ganz besonders bevorzugt ist das Transmissions- und/oder Synchronisationsgetriebe kostengünstig und zuverlässig als biegsame Welle ausgelegt. Diese ist wiederum bevorzugt mit einem oder zwei Schneckentrieben zum Antrieb der Nachstellvorrichtungen auf der der Zuspannvorrichtung gegenüberliegenden Seite der Bremsscheibe versehen.

Vorteilhaft ist der Bremssattel als Festsattel ausgelegt und die Bremsscheibe um den Betrag des Arbeitshubes der Bremse axial beweglich. Alternativ kann der Bremssattel auch als Schiebe-oder Schwenk- und/oder als flexibler Sattel ausgelegt sind, der um den Betrag des Arbeitshubes beweglich ist.

Bevorzugt ist zumindest jeweils ein Synchronisationsgetriebe zur Synchronisation der beiden Nachstellvorrichtungen auf jeder Seite der Bremsscheibe innerhalb des Bremssattels angeordnet. Dabei kann die biegsame Welle diese Synchronfunktion auf der der Zuspannvorrichtung abgewandten Seite der Bremsscheibe übernehmen, welche die dort angeordneten Nachstellvorrichtungen gemeinsam synchron antreibt.

Nachfolgend wird die Erfindung unter Bezug auf die Zeichnungen anhand von Ausführungsbeispielen näher beschrieben. Es zeigt:
- Figur 1: einen Schnitt durch ein erstes Ausführungsbeispiel einer erfmdungsgemäßen Scheibenbremse;
- Figur 2: die Ansicht A-A aus Figur 1;
- Figur 3: die Ansicht B-B aus Figur 1;

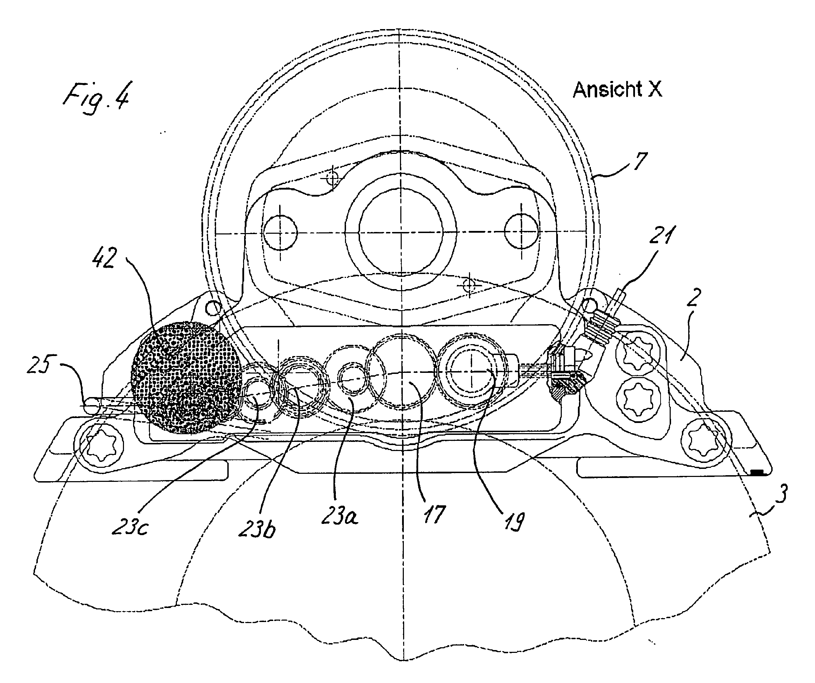

- Figur 4: die Ansicht X aus Figur 1,
- Figur 5a-5c: Ausschnittsvergrößerungen und Varianten von Nachstellvorrichtungen auf der von der Zuspannvorrichtung abgewandten Seite des Bremssattels;
- Figur 6a-6c: Detailansichten von Elementen eines weiteren Ausführungsbeispiels und
- Figur 7a-7c: einen Schnitt durch eine erfindungsgemäße Scheibenbremse, eine Detailansicht und eine Variante des in Figur 7a rechten Bereiches der Scheibenbremse.

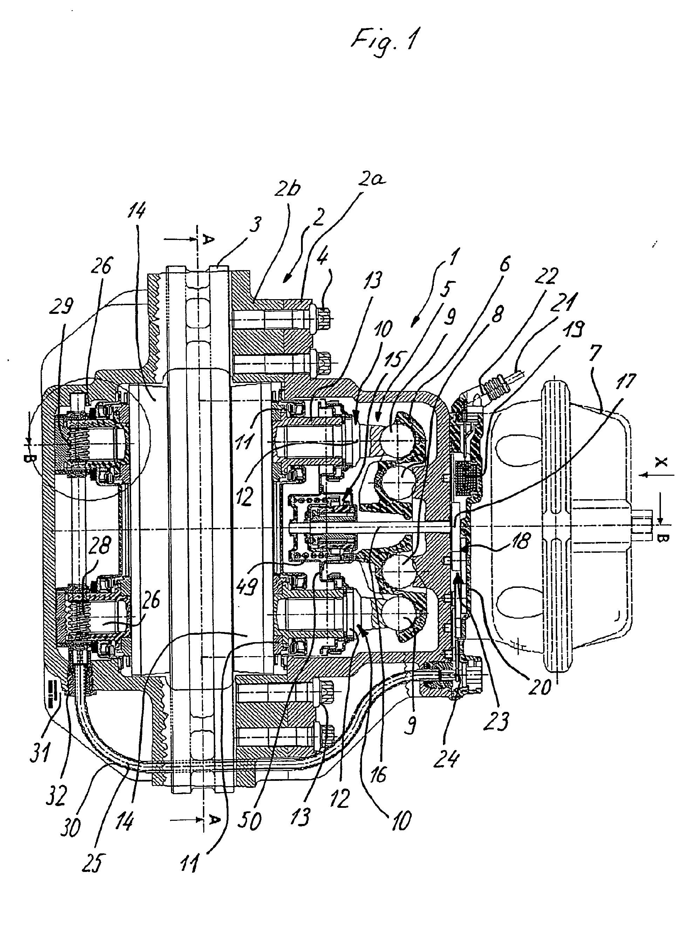

Figur 1 zeigt eine Scheibenbremse 1 für Nutzfahrzeuge mit einem hier zweiteiligen Bremssattel 2 mit Bremssattelteilen 2a und 2b. Der Bremssattel fasst eine Bremsscheibe 3 in ihrem oberen Umfangsbereich ein. Die Bremssattelteile 2a und 2b sind mittels Schraubbolzen 4 miteinander verschraubt.

Der Bremssattel 2 ist als Festsattel ausgebildet, d.h. er ist unbeweglich beispielsweise an einem (hier nicht dargestellten) Achsflansch eines zugehörigen Fahrzeuges befestigt.

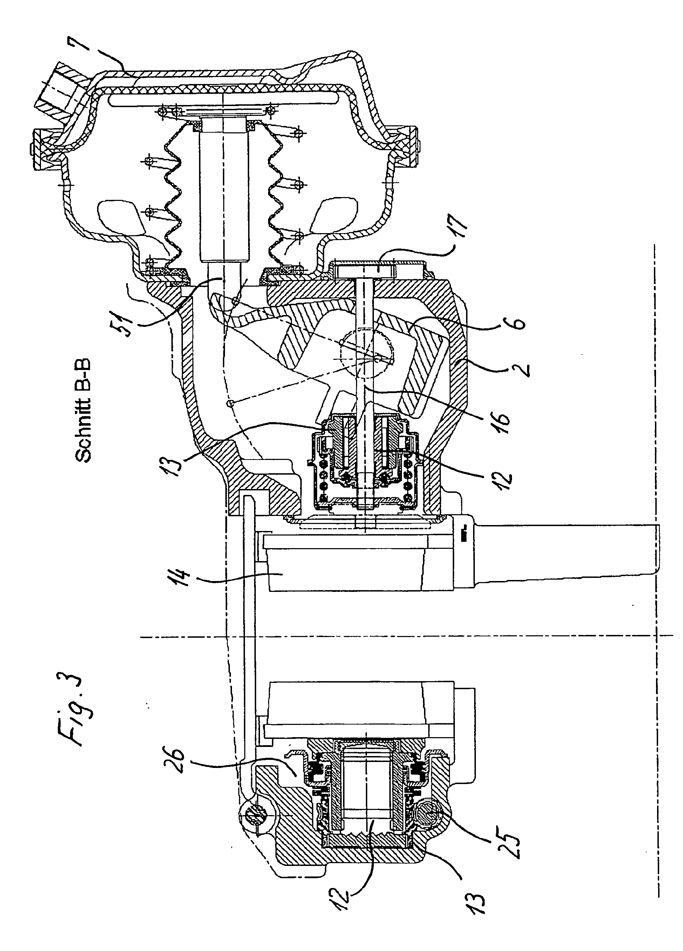

Die Scheibenbremse weist eine im Bremssattel 2 auf einer Seite der Bremsscheibe 3 angeordnete Zuspannvorrichtung 5 mit einem Drehhebel 6 auf. Der Drehhebel 6 wird mittels einer in Fig. 3 zu erkennenden Kolbenstange 51 eines Bremszylinders 7 betätigt.

Der Drehhebel 6 ist in seinem unteren Bereich exzentrisch gelagert und stützt sich über zwei erste kugelartige Elemente 8 am Inneren des Bremssattels 2 ab, wohingegen auf der gegenüberliegenden Seite des Drehhebels zwei weitere kugelartige Elemente 9 vorgesehen sind, welche jeweils auf eine von zwei axial verschieblich angeordneten Nachstellvorrichtungen 10 einwirken.

Die zwei Nachstellvorrichtungen 10 auf der Zuspannseite der Bremsscheibe 3 sind parallel zueinander ausgerichtet und an ihren der Bremsscheibe zugewandten Ende mit Druckstücken 11 versehen, die auf eine erste, zuspannseitige Bremsbacke 12 mit Bremsbelagträger und Belagmaterial einwirken.

Die Nachstellvorrichtungen 10 bestehen hier aus Gewindespindeln 12, die ein Außengewinde aufweisen und mit dem Innengewinde von Nachstellhülsen 13 zusammenwirken, wobei eine Relativverdrehung zwischen den Gewindespindeln 12 und den Nachstellhülsen 13 die axiale Länge der Nachstellvorrichtung 10 verändert, was zum Ausgleich von Belagverschleiß des zuspannseitigen - d.h. auf der Seite der Zuspannvorrichtung angeordneten - Bremsbelags 14 nutzbar ist.

Die beiden Nachstellvorrichtungen 10 bzw. deren Nachstellhülsen 13 werden über ein zwischen den beiden Nachstellhülsen angeordnetes Synchrongetriebe 15 beispielsweise mittels eines Zahnriemens oder einer Kette oder aber mittels Zahnrädern synchron gedreht.

Das Synchrongetriebe 15 wird von einer Welle 16 angetrieben, welches sowohl den Drehhebel 6 als auch den Bremssattel 2 durchsetzt und an deren Ende außerhalb des Bremssattels 2 ein Abtriebszahnrad 17 eines Getriebes 18 angeordnet ist, welches von einem Elektromotor 19 angetrieben 1 wird, der zusammen mit dem Getriebe 18 in einem Deckel 20 angeordnet ist, der unterhalb des Bremszylinders 7 (siehe Figur 3) an der Außenseite des Bremssattels 2 befestigt ist.

Eine Leitung 21 mit Stecker 22, der den Deckel 20 durchsetzt, dient zur Versorgung mit elektrischer Energie sowie ggf. zum Anschluss von Steuerleitungen zu einem externen Rechner. Alternativ kann ein eigener Steuer- und/oder Regelungsrechner mit geeignetem Mikroprozessor auch direkt im Deckel 20 angeordnet sein.

Das Getriebe 18 weist nicht nur das eine Abtriebszahnrad 17 auf sondern es ist über weitere Zahnräder 23 mit einem weiteren Abtriebsrad 24 verbunden, das über ein Transmissions- und Synchronisationsgetriebe in Form einer biegsamen Welle 25, die außen am Bremssattel oder durch das Bremssattelinnere oder durch einen Kanal im Bremssattelinneren verläuft, mit den Nachstellvorrichtungen 26 auf der von der Zuspannvorrichtung abgewandten Seite des Bremssattels verbunden ist.

Die biegsame Welle 25 dient als Transmissionsgetriebe für die zwei weiteren Nachstellvorrichtungen 26 auf der gegenüberliegenden Seite des Bremssattels bzw. im Bremssattelinneren auf der gegenüberliegenden Seite der Bremsscheibe. Eine Rückstellfeder 49, die sich an einem relativ zum Bremssattel fixen bzw. an diesem befestigten Blech 50 abstützt, realisiert die Rückstellfunktion für die Zuspannvorrichtung 5 nach einer Bremsbetätigung.

Die beiden ebenfalls zueinander parallelen reaktionsseitigen Nachstellvorrichtungen 26 stützen sich einerseits am Bremssattelinneren ab und sind andererseits ebenfalls mit Gewindespindeln 12 und Nachstellhülsen 13 versehen, welche relativ zueinander verdrehbar sind und bei deren Relativverdrehbarkeit wiederum die sondern axiale Länge der Nachstellvorrichtungen verändert wird, was u.a. zum Ausgleich des Bremsbelagverschleißes des reaktionsseitigen Bremsbelages 14 dient.

Die Bremsscheibe 3 ist hier entsprechend dem Festsattelkonzept mit Nachstellvorrichtungen auf beiden Seiten der Bremsscheibe 3 um den Betrag des Arbeitshubes der Scheibenbremse axial beweglich, z.B. auf der Radachse verschiebbar, angeordnet.

Nach Fig. 1 werden in vorteilhafter Weise mit nur einem einzigen Elektromotor 19 auf einer Seite der Scheibenbremse bzw. auf einer Seite des Bremssattels 2 insgesamt vier Nachstellvorrichtungen 10, 26 und insbesondere auch alle Nachstellvorrichtungen auf beiden Seiten der Bremsscheibe synchron und von nur einem Motor angetrieben. Hieraus resultiert ein relativ niedriger Materialaufwand in Hinsicht auf die Anzahl der eingesetzten Elektromotoren.

Insbesondere ist es auch nicht notwendig, auf der der Zuspannvorrichtung gegenüberliegenden Seite der Bremsscheibe 3 einen Elektromotor anzuordnen. Dies kann vorteilhaft sein, da dieser Motor im allgemeinen etwas höheren Betriebstemperaturen ausgesetzt wäre als der Elektromotor, welcher auf der Seite der Zuspannvorrichtung angeordnet wird und weiter von der Bremsscheibe 3 entfernt liegt.

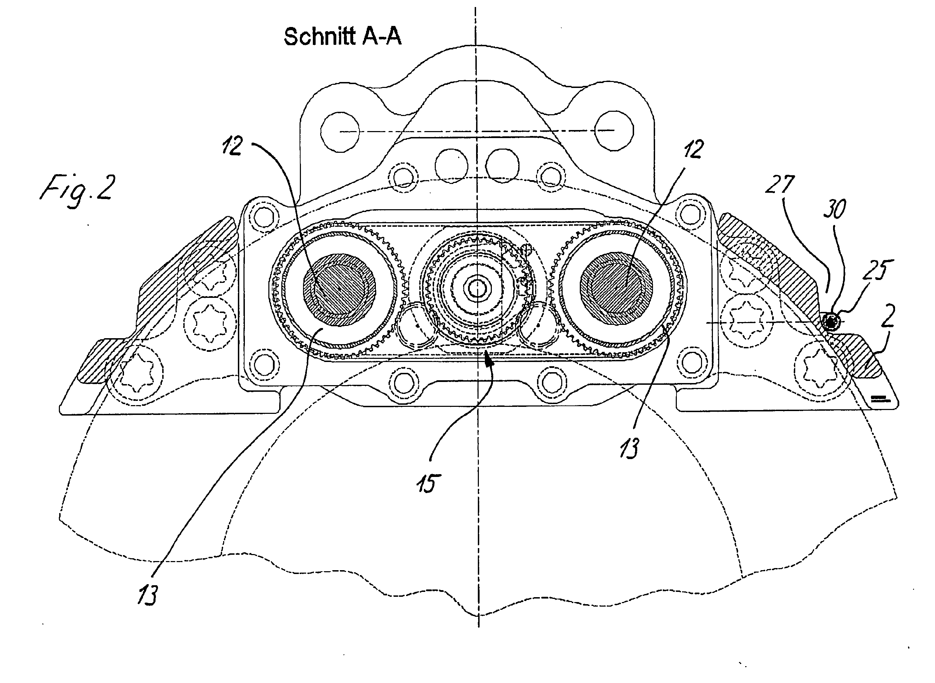

Figur 2 zeigt u.a. einen Schnitt durch die Nachstelleinrichtungen 10 mit den Gewindespindeln 12 und den Nachstellhülsen 13.

Fig. 3 zeigt dagegen sowohl das erste Abtriebszahnrad 17 als auch die weiteren Zahnräder 23a, 23b sowie 23c des Getriebes, die an der Außenseite des Bremssattels 2 im Deckel 20 angeordnet sind. Erkennbar ist auch die hier in einer Ausnehmung 27 des Bremssattels 2 an dessen Außenrand verlegte flexible Welle 25.

Die biegsame Welle 25 ist im Bereich der Nachstellhülse 13 der beiden Nachstellvorrichtungen 26 auf der der Zuspannvorrichtung 5 gegenüberliegenden Seite der Bremsscheibe 3 mit Schneckenrädern 28, 29 versehen, welche z.B. mit den außenverzahnten Nachstellhülsen 13 kämmen.

Besonders bevorzugt ist die flexible Welle 25 nach Art der Figur 1 in einem Rohr 30 angeordnet, welches flexibel ausgebildet sein kann und an der Außenseite des Bremssattels bzw. an der Außenseite des Bremssattels von einer Seite der Bremsscheibe zur anderen verlegt ist und erst auf der gegenüberliegenden Seite der Bremsscheibe 3 wieder den Bremssattel 2 im Bereich einer Bohrung 31 durchsetzt, wobei zwischen dem Rohr und der Innenwandung der Bohrung 31 ein Durchführungsstopfen 32 angeordnet ist.

Das Rohr 30 kann mit einer reibungs- und verschleißmindernden Zwischenschicht versehen werden, die beispielsweise aus einem temperaturbeständigen Schmiermittel oder einer temperaturbeständigen Gleitbeschichtung bestehen kann.

Die Gleitbeschichtung kann als Gleitlack ausgebildet sein oder auf Kunststoffbasis sowie aus Teflon bestehen. Sie kann auch auf der biegsamen Welle 25 oder der Rohrinnenwand aufgebracht werden. Denkbar ist auch eine Zwischenschicht als Hülse aus gleitfähigem Material zwischen biegsamer Welle und Rohrinnenwand, wobei hier eine Kunststoffhülse oder auch eine Teflonhülse denkbar sind.

Die Schneckenräder 28, 29 können entweder mit Zahnrädern auf den Nachstellhülsen kämmen oder aber mit einem axialverzahnten Scheibe 34.

Alternativ könnten die beiden Nachstellvorrichtungen auch über ein separates Synchronisationsgetriebe wie eine Kette miteinander gekoppelt sein. Mit der in Fig. 1 gewählten Anordnung ist es vorteilhaft möglich, mit nur einem einzigen Getriebe - der biegsamen Welle 25 - die Synchronisationsaufgaben der Reaktionsseitigen Nachstellvorrichtungen mit zu realisieren.

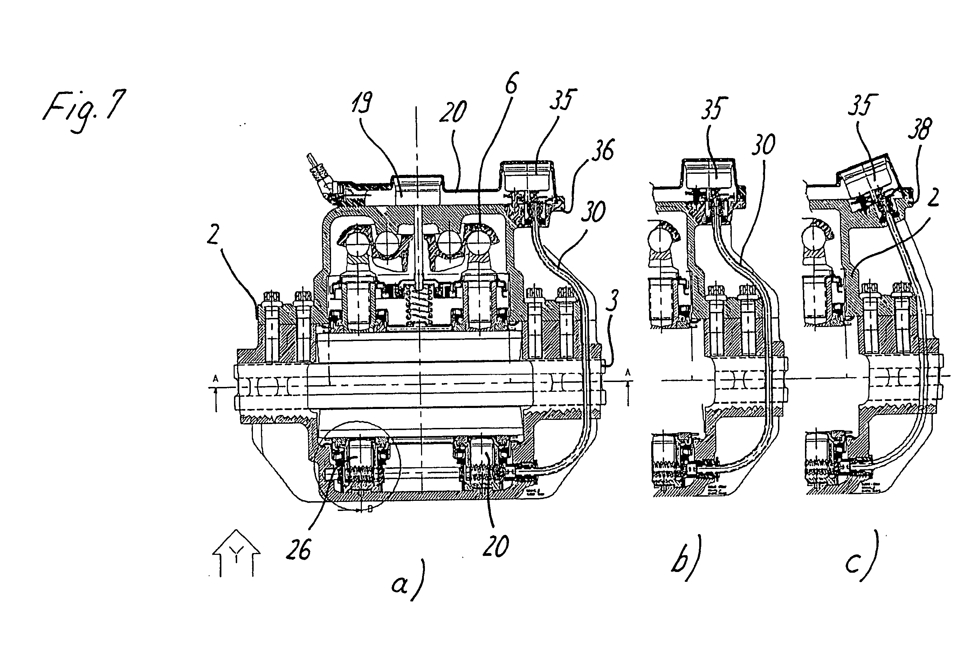

Eine alternative Anordnung zur Fig. 1 zeigt Fig. 7. Hier sind zwei Elektromotoren 19, 35 vorgesehen, die beide auf der mit der Zuspannvorrichtung versehenen Seite ― also auf einer gemeinsamen Seite - der Bremsscheibe angeordnet sind, wobei der eine der Elektromotoren 35 direkt oder über ein Getriebe die biegsame Welle 25 und der andere hier direkt (oder über ein weiteres Getriebe; hier nicht dargestellt) die Welle 16 antreibt.

Zwar wird hier ein weiterer Motor 35 benötigt. Dagegen steht der Vorteil des Einsparens einiger Getriebeelemente. Auch können die einzelnen Motoren etwas kleiner dimensioniert werden als in Fig. 1.

Die Synchronisation kann hier über die Ansteuerung der Motoren erfolgen. Denkbar sind z.B. Sensoren zur Positionsbestimmjung oder aber andere Steuerungs- und/oder regelungstechnische Maßnahmen wie eine Positionserkennung über eine Analyse der Motorstromcharakteristik.

Fig. 7b und 7c unterscheiden sich durch die Anordnung des Elektromotors 35 zum Antrieb der biegsamen Welle 25. Nach Fig. 7a und b ist der Elektromotor an dem Bremssattel2 mittels eines separaten Ansatzes 36 befestigt, wobei die Abtriebswelle 37 nahezu parallel zur Bremsscheibenachse ausgerichtet ist. Daher muss die biegsame Welle 25 zunächst in einem Bogen nach außen um den Bremssattel und die Bremsscheibe 3 herum geführt und dann in einem weiteren Bogen in Richtung der Nachstellvorrichtung 26 geführt werden, welche die Welle parallel zur Scheibenebene und senkrecht zur Nachstellrichtung erreicht.

Dies ist in Fig. 7c anders. Einerseits ist hier direkt an den Bremssattel 2 selbst ein Ansatz 38 angeformt. Andererseits ist der Motor bzw. dessen Abtriebswelle 37 etwas geneigt zur Bremsscheibenachse ausgerichtet, so dass die biegsame Welle weniger stark gebogen werden muss, um sie um den Bremssattelrand herum zu führen. Das Rohr 30 wird hier in einem ersten, gerade verlaufenden und dickwandigeren Bereich starr und dann in einem weiteren Bereich um den Bremssattel 2 herum zur Nachstellvorrichtung 26 hin flexibel ausgelegt.

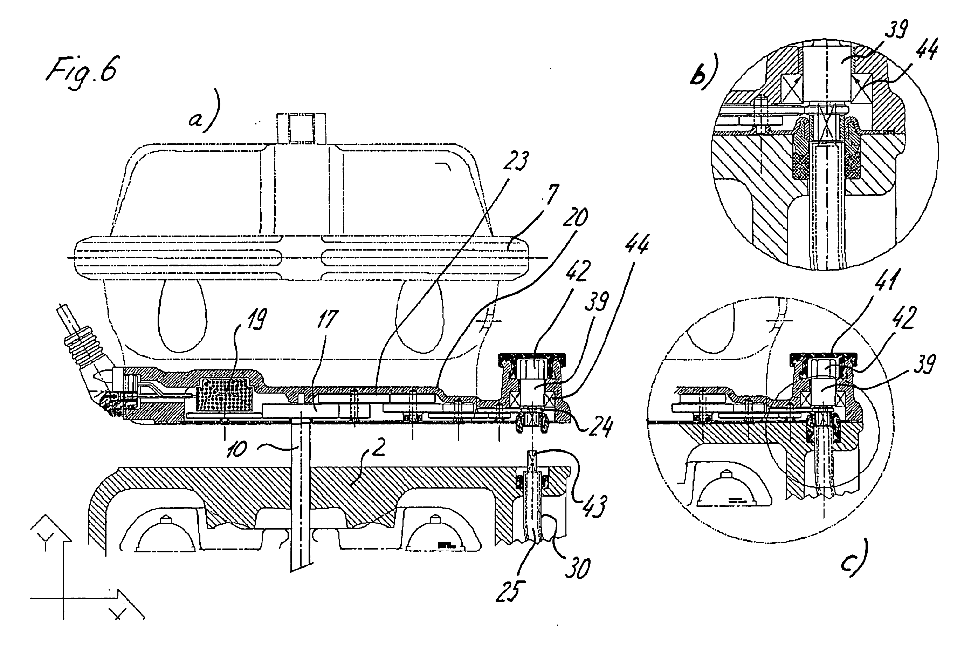

Wie in Fig. 6 ergänzend zu erkennen, ist es insbesondere bei dem Ausführungsbeispiel der Fig. 1 leicht möglich, das Abtriebszahnrad 24 auf eine Welle 39 aufzusetzen, deren eines Ende als Hohlwellenabschnitt 40 ausgebildet sein kann, in welche ein Mehrkant-Kopfende 43 der flexiblen Welle 25 eingreift. Zur Außenseite hin bzw. an dem vom Hohlwellenabschnitt 40 ausgebildeten Ende kann die im Deckel mittels eines Lagers 44 gelagerte Welle 37 z.B. mit einem Außenmehrkantkopf 42 versehen werden, der durch eine Kappe 41 auf dem Deckel 20 zugänglich ist. Mit dieser manuell betätigbaren Rückstelleinrichtung kann derart unkompliziert eine optionale manuelle Rückstellfunktion realisiert werden, ggf. zusätzlich kombiniert mit einer Überlastsicherung (z.B. Sollbruchstelle in der Welle 37).

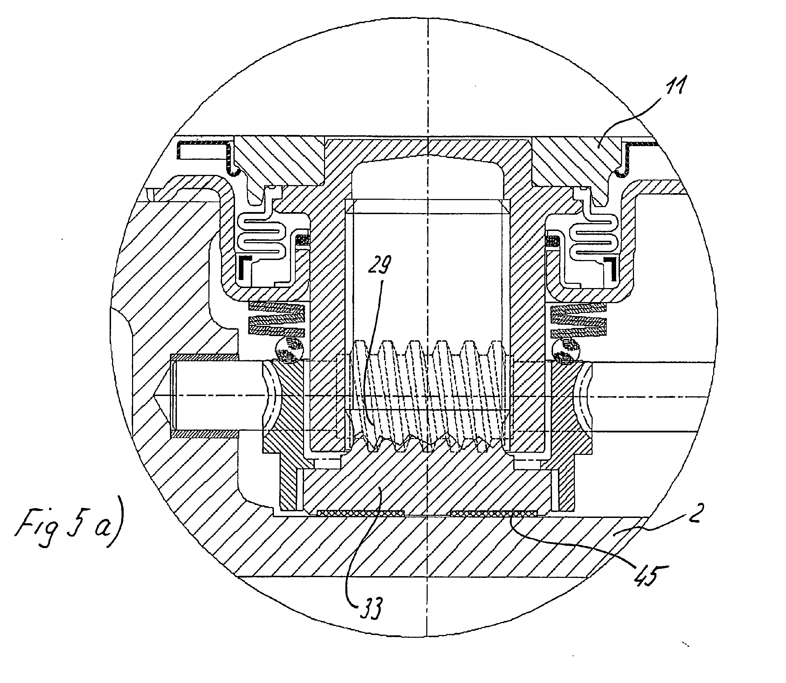

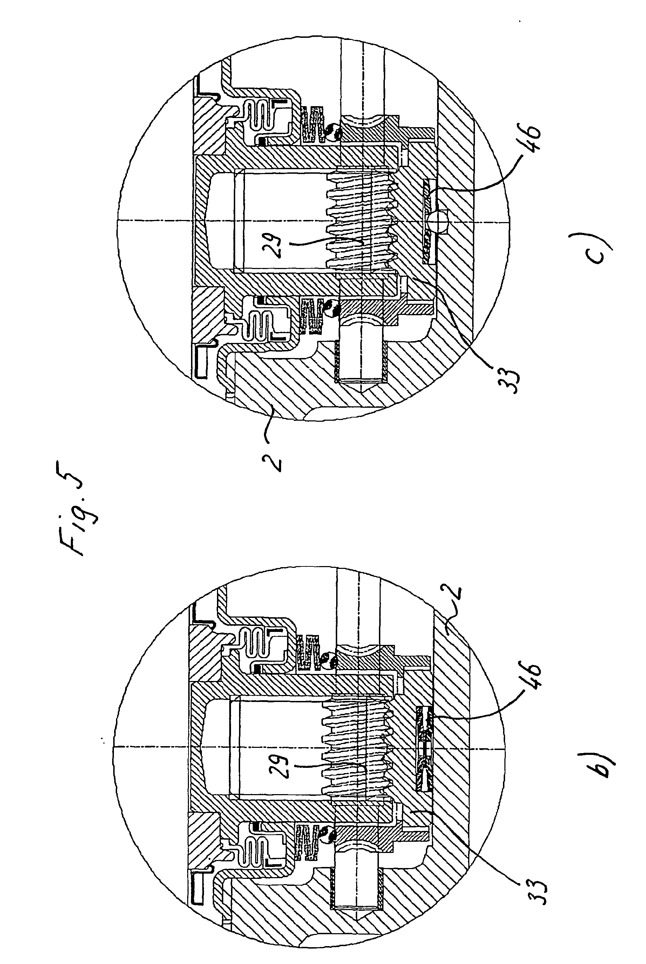

Nach Fig. 5a ist die axial verzahnte Scheibe mittels Gleitlagern 45 am Bremssattelinneren abgestützt. In Fig. 5b und c sind stattdessen jeweils verschiedene vorgespannte Federn 46 wie Tellerfedern zwischen der Scheibe 33 und dem Bremssattelinneren angeordnet.

### Bezugszeichenliste

- Scheibenbremse: 1
- Bremssattel: 2
- Bremssattelteile: 2a, 2b
- Bremsscheibe: 3
- Schraubbolzen: 4
- Zuspannvorrichtung: 5
- Drehhebel: 6
- Bremszylinder: 7
- Element: 8
- Element: 9
- Nachstellvorrichtung: 10
- Druckstück: 11
- Bremsbacke: 12
- Nachstellhülse: 13
- Bremsbelag: 14
- Synchrongetriebe: 15
- Welle: 16
- Abtriebszahnrad: 17
- Getriebe: 18
- Elektromotor: 19
- Deckel: 20
- Leitung: 21
- Stecker: 22
- Zahnrad: 23
- Zahnrad: 23a, 23b, 23c, 23d
- Abtriebsrad: 24
- Welle: 25
- Nachstellvorrichtung: 26
- Ausnehmung: 27
- Schneckenrad: 28,29
- Rohr: 30
- Bohrung: 31
- Durchführungsstopfen: 32
- Zahnrad: 33
- Scheibe: 34
- Elektromotor: 35
- Ansatz: 36
- Abtriebswelle: 37
- Ansatz: 38
- Welle: 39
- Hohlwellenabschnitt: 40
- Kappe: 41
- Außenmehrkantkopf: 42
- Mehrkantkopfende: 43
- Lager: 44
- Gleitlager: 45
- Federn: 46
- Rückstellfeder: 47
- Rückstellfeder: 49
- Blech: 50
- Kolbenstange: 51

## Patentansprüche

1. Pneumatisch oder elektromorisch betätigte Scheibenbremse mit
a) einem Bremssattel (2), der eine Bremsscheibe (3) einfasst;
b) einer im Bremssattel auf einer Seite der Bremsscheibe (3) angeordneten Zuspannvorrichtung (5), insbesondere mit einem Drehhebel (6);
c) jeweils wenigstens einer elektromotorisch angetriebenen Nachstellvorrichtung (10, 26) auf jeder Seiten der Bremsscheibe;
d) wobei die wenigstens eine Nachstellvorrichtung (26) auf der Reaktionsseite der Bremsscheibe mittels eines Transmissions- und/oder Synchronisationsgetriebes (25), dass sich von einer Seite der Bremsscheibe (3) zur anderen erstreckt, angetrieben ist,
**dadurch gekennzeichnet, dass**
e) die Nachstellvorrichtungen (10) beidseits der Bremsscheibe (3) von zwei Elektromotoren (19, 35) gemeinsam angetrieben werden, wobei die zwei Elektromotoren (19, 35) relativ zur Bremsscheibenebene auf einer gemeinsamen Seite des Bremssattels angeordnet sind,
f) das Transmissions- und/oder Synchronisationsgetriebe (25) zwischen der wenigstens einen Nachstellvorrichtung auf der der Zuspannvorrichtung gegenüberliegenden Seite der Bremsscheibe (3) und Elektromotoren (19, 35) angeordnet ist.

2. Scheibenbremse nach Anspruch 1, **dadurch gekennzeichnet, dass** die Elektromotoren (19) zum Antrieb der Nachstellvorrichtungen außerhalb des Bremssattels angeordnet sind.

3. Scheibenbremse nach Anspruch 1 oder 2 mit zwei Elektromotoren zum Antrieb der Nachstellvorrichtungen, **gekennzeichnet durch** eine Steuervorrichtung, die derart ausgelegt ist, dass eine getrennte Ansteuerbarkeit der Nachstellvorrichtungen auf den beiden Seiten der Bremsscheibe möglich ist.

4. Scheibenbremse nach einem der Ansprüche 1, 2 oder 3, **dadurch gekennzeichnet, dass** auf jeder Seite der Bremsscheibe (3) zwei jeweils miteinander synchronisierte Nachstellvorrichtungen (10, 26) angeordnet sind, die jeweils aus einer Hülse und einer Gewindespindel (12, 13) bestehen.

5. Scheibenbremse nach einem der vorstehenden Ansprüche, **dadurch gekennzeichnet, dass** das Transmissions- und/oder Synchronisationsgetriebe als biegsame Welle (25) ausgelegt ist.

6. Scheibenbremse nach einem der vorstehenden Ansprüche, **dadurch gekennzeichnet, dass** die biegsame Welle (25) mit einem oder zwei Schneckentrieben (28, 29) zum Antrieb der Nachstellvorrichtungen (26) auf der der Zuspannvorrichtung gegenüberliegenden Seite der Bremsscheibe (3) versehen ist.

7. Scheibenbremse nach einem der vorstehenden Ansprüche, **dadurch gekennzeichnet, dass** der Bremssattel (2) als Festsattel ausgelegt und die Bremsscheibe (3) um den Betrag des Arbeitshubes der Bremse axial beweglich ist.

8. Scheibenbremse nach einem der vorstehenden Ansprüche, **dadurch gekennzeichnet, dass** der Bremssattel (2) als Schiebe- oder Schwenk- oder als flexibler Sattel ausgelegt ist, der um den Betrag des Arbeitshubes beweglich ist.

9. Scheibenbremse nach einem der vorstehenden Ansprüche, **dadurch gekennzeichnet, dass** sich der exzentrisch gelagerte Drehhebel (6) über kugelartige Elemente (8) am Inneren des Bremssattels (2) abstützt und dass zwei auf der gegenüberliegenden Seite des Drehhebels weitere kugelartige Elemente (9) vorgesehen sind, welche jeweils auf eine der axial verschieblich angeordneten Nachstellvorrichtungen (10) einwirken.

10. Scheibenbremse nach einem der vorstehenden Ansprüche, **dadurch gekennzeichnet, dass** das Synchrongetriebe (15) zur Synchronisation der zuspannseitigen Nachstellvorrichtungen (10) von einer Welle (16) angetrieben ist, welche sowohl den Drehhebel (6) als auch den Bremssattel (2) durchsetzt.

11. Scheibenbremse nach einem der vorstehenden Ansprüche, **dadurch gekennzeichnet, dass** der Elektromotor (35) zum Antrieb der biegsamen Welle (25) an dem Bremssattel (2) mittels eines separaten oder an diesen angeformten Ansatz (36) befestigt ist und dass Abtriebswelle (37) dieses Elektromotors parallel oder geneigt zur Bremsscheibenachse ausgerichtet ist.

12. Scheibenbremse nach einem der vorstehenden Ansprüche, **dadurch gekennzeichnet, dass** die biegsame Welle (25) außen am Bremssattel oder durch das Bremssattelinnere oder durch einen Kanal im Bremssattelinneren verläuft.

13. Scheibenbremse nach einem der vorstehenden Ansprüche, **dadurch gekennzeichnet, dass** die biegsame Welle (25) die Nachstellvorrichtungen auf der Reaktionsseite gemeinsam synchron antreibt.

14. Scheibenbremse nach einem der vorstehenden Ansprüche, **dadurch gekennzeichnet, dass** die biegsame Welle (25) in einem Rohr (30) angeordnet ist

15. Scheibenbremse nach einem der vorstehenden Ansprüche, **dadurch gekennzeichnet, dass** das Rohr (30) außen am Bremssattel (2) angeordnet ist.

16. Scheibenbremse nach einem der vorstehenden Ansprüche, **dadurch gekennzeichnet, dass** das Rohr (30) flexibel ausgelegt ist.

17. Scheibenbremse nach einem der vorstehenden Ansprüche, **dadurch gekennzeichnet, dass** das Rohr (30) und/oder die biegsame Welle (25) mit einer reibungs- und verschleißmindernden Zwischenschicht versehen ist/sind.

18. Scheibenbremse nach einem der vorstehenden Ansprüche, **dadurch gekennzeichnet, dass** die Zwischenschicht als Hülse aus gleitfähigem Material zwischen biegsamer Welle und Rohrinnenwand ausgebildet ist.

19. Scheibenbremse nach einem der vorstehenden Ansprüche, **dadurch gekennzeichnet, dass** die Schneckenräder (28, 29) mit Zahnrädern auf den Nachstellvorrichtungen oder mit einer axialverzahnten Scheibe (34) kämmen.

20. Scheibenbremse nach einem der vorstehenden Ansprüche, **gekennzeichnet durch** eine manuell betätigbare Rückstelleinrichtung.

## Claims

1. A pneumatically or electromotively actuated disk brake having
a) a brake calliper (2) which includes a brake disk (3),
b) a brake application device (5) positioned in the brake calliper on one side of the brake disk (3), in particular with a rotating lever (6),
c) at least one electromotively driven adjusting device (10, 26) on each side of the brake disk,
d) the at least one adjusting device (26) on the reaction side of the brake disk being driven by means of a transmission and/or synchronisation gear (25) which extends from one side of the brake disk (3) to the other,
**characterised in that**
e) the adjusting devices (10) on both sides of the brake disk (3) are driven together by two electric motors (19, 35), the two electric motors (19, 35) being positioned on the same side of the brake calliper in relation to the brake disk plane,
f) the transmission and/or synchronous gear (25) is positioned between the at least one adjusting device on the side of the brake disk (3) opposite the brake application device and the two electric motors (19, 35).

2. A disk brake in accordance with claim 1,
**characterised in that**
the electric motors (19) for driving the adjusting devices are positioned outside the brake calliper.

3. A disk brake in accordance with claim 1 or 2 having two electric motors for driving the adjusting devices,
**characterised by**
a control device which is designed in such a manner that the adjusting devices on the two sides of the brake disk can be controlled separately.

4. A disk brake in accordance with one of claims 1, 2 or 3,
**characterised in that**
positioned on each side of the brake disk (3) are two synchronised adjusting devices (10, 26), each of which consists of a sleeve and a threaded spindle (12, 13).

5. A disk brake in accordance with one of the preceding claims,
**characterised in that**
the transmission and/or synchronisation gear is designed as a flexible shaft (25).

6. A disk brake in accordance with one of the preceding claims,
**characterised in that**
the flexible shaft (25) is provided with one or two worm gears (28, 29) for driving the adjusting devices (26) on the side of the brake disk (3) opposite the brake application device.

7. A disk brake in accordance with one of the preceding claims,
**characterised in that**
the brake calliper (2) is designed as a fixed calliper and the brake disk (3) can be moved axially by the amount of the working stroke.

8. A disk brake in accordance with one of the preceding claims,
**characterised in that**
the brake calliper (2) is designed as a sliding or pivoting calliper or as a flexible calliper which can be moved by the amount of the working stroke.

9. A disk brake in accordance with one of the preceding claims,
**characterised in that**
the eccentrically mounted rotating lever (6) rests on spherical elements (8) on the inside of the brake calliper (2) with two further spherical elements (9) being positioned on the opposite side of the rotating lever, each of which acts on the adjusting devices (10) which are positioned such that they are able to move axially.

10. A disk brake in accordance with one of the preceding claims,
**characterised in that**
the synchronous gear (15) for synchronising the adjusting devices (10) positioned on the brake application side is driven by a shaft (16) which passes through both the rotating lever (6) and the brake calliper (2).

11. A disk brake in accordance with one of the preceding claims,
**characterised in that**
the electric motor (35) for driving the flexible shaft (25) is fixed to the brake calliper (2) by means of a projection (36) which is either separate or formed in one piece with the brake calliper (2), and the driven shaft (37) of this electric motor is oriented parallel to or inclined towards the brake disk axis.

12. A disk brake in accordance with one of the preceding claims,
**characterised in that**
the flexible shaft (25) runs on the outside of the brake calliper or through the inside of the brake calliper or through a channel in the inside of the brake calliper.

13. A disk brake in accordance with one of the preceding claims,
**characterised in that**
the flexible shaft (25) drives the adjusting devices together synchronously on the reaction side.

14. A disk brake in accordance with one of the preceding claims,
**characterised in that**
the flexible shaft (25) is positioned in a tube (30).

15. A disk brake in accordance with one of the preceding claims,
**characterised in that**
the tube (30) is positioned on the outside of the brake calliper (2).

16. A disk brake in accordance with one of the preceding claims,
**characterised in that**
the tube (30) is of flexible design.

17. A disk brake in accordance with one of the preceding claims,
**characterised in that**
the tube (30) and/or the flexible shaft (25) is/are provided with a friction- and wear-reducing intermediate layer.

18. A disk brake in accordance with one of the preceding claims,
**characterised in that**
the intermediate layer is designed as a sleeve made of a material with sliding qualities between the flexible shaft and the inner tube wall.

19. A disk brake in accordance with one of the preceding claims,
**characterised in that**
the worm gears (28, 29) engage with gearwheels on the adjusting devices or with an axially toothed disk (34).

20. A disk brake in accordance with one of the preceding claims,
**characterised by**
a manually actuatable return device.

## Revendications

1. Frein à disque actionné pneumatiquement ou par moteur électrique comprenant
a) un étrier (2) de frein, qui enchâsse un disque (3) de frein;
b) un dispositif (5) de serrage monté dans l'étrier de frein, d'un côté du disque (3) de frein, en ayant notamment un levier (6) de rotation;
c) respectivement au moins un dispositif (10, 26) de rattrapage de jeu, entraîné par un moteur électrique, de chaque côté des disques de freins;
d) dans lequel le au moins un dispositif (26) de rattrapage de jeu est entraîné du côté réaction du disque du frein, au moyen d'un mécanisme (25) de transmission et/ou de synchronisation, qui s'étend d'un côté du disque (3) de frein à l'autre,
**caractérisé en ce que**,
e) les dispositifs (10) de rattrapage de jeu sont entraînés conjointement de part et d'autre du disque (3) de frein par deux moteurs (19, 35) électriques, les deux moteurs (19, 35) électriques étant disposés par rapport au plan du disque de frein, d'un côté commun de l'étrier de frein,
f) le mécanisme (25) de transmission et/ou de synchronisation est disposé entre le au moins un dispositif de rattrapage de jeu du côté du disque (3) opposé au dispositif de serrage et les moteurs (19, 35) électriques.

2. Frein à disques selon la revendication 1, **caractérisé en ce** les moteurs (19) électriques d'entraînement des dispositifs de rattrapage de jeu sont disposés à l'extérieur de l'étrier de frein.

3. Frein à disques selon les revendications 1 ou 2, comprenant deux moteurs électriques d'entraînement des dispositifs de rattrapage de jeu, **caractérisé par** un dispositif de commande qui est tel qu'une possibilité de commande distincte des dispositifs de rattrapage de jeu est possible des deux côtés du disque de frein.

4. Frein à disques selon les revendications 1, 2 ou 3, **caractérisé en ce que** de chaque côté du disque (3) du frein sont montés respectivement deux dispositifs (10, 26) de rattrapage de jeu synchronisés entre eux et constitués respectivement d'une douille et d'une broche (12, 13) filetée.

5. Frein à disques selon l'une des revendications précédentes, **caractérisé en ce que** le méchanisme de transmission et/ou de synchronisation est conçu sous la forme d'un arbre(25) flexible.

6. Frein à disques selon l'une des revendications précédentes, **caractérisé en ce que** l'arbre (25) flexible est muni d'un ou deux entraînements (28, 29) à vis pour entraîner les dispositifs (26) de rattrapage de jeu du côté du disque (3) de frein opposé au dispositif de serrage.

7. Frein à disques selon l'une des revendications précédentes, **caractérisé en ce que** l'étrier (2) de frein est conçu en la forme d'un étrier fixe et le disque (3) de frein est mobile axialement, du montant de la course de travail du frein.

8. Frein à disques suivant l'une des revendications précédentes, **caractérisé en ce que** l'étrier (2) de frein est conçu sous la forme d'un étrier coulissant ou basculant ou souple, qui est mobile du montant de la course de travail.

9. Frein à disques suivant l'une des revendications précédentes, **caractérisé en ce que** le levier (6) de rotation monté de manière excentré s'appuie par des éléments (8) de type à bille à l'intérieur de l'étrier (2) de frein et **en ce qu'**il est prévu deux autres éléments (9) de type à bille sur le côté opposé du levier de rotation, qui agissent respectivement sur l'un des dispositifs (10)de rattrapage de jeu montés coulissants axialement.

10. Frein à disques suivant l'une des revendications précédentes, **caractérisé en ce que** le mécanisme (15) de synchronisation des dispositifs (10) de rattrapage du jeu du côté serrage est entraîné par un arbre (16) qui traverse tant le levier (6) de rotation que l'étrier (2) de frein.

11. Frein à disques suivant l'une des revendications précédentes, **caractérisé en ce que** le moteur (35) d'entraînement électrique de l'arbre (25) flexible est fixé sur l'étrier (2) de frein au moyen d'un talon(36) distinct et formé sur celui-ci, et **en ce que** l'arbre (37) de sortie de ce moteur électrique est dirigé parallèlement à l'axe du disque de frein, ou en étant incliné par rapport à celui-ci.

12. Frein à disques suivant l'une des revendications précédentes, **caractérisé en ce que** l'arbre (25) flexible s'étend à l'extérieur sur l'étrier de frein ou à l'intérieur de l'étrier de frein ou dans un canal à l'intérieur de l'étrier de frein.

13. Frein à disques suivant l'une des revendications précédentes, **caractérisé en ce que** l'arbre (25) flexible entraîne en synchronisme conjointement les dispositifs de rattrapage de jeu du côté réaction.

14. Frein à disques suivant l'une des revendications précédentes, **caractérisé en ce que** l'arbre (25) flexible est disposé dans un tuyau (30).

15. Frein à disques suivant l'une des revendications précédentes, **caractérisé en ce que** le tuyau (30) est disposé à l'extérieur de l'étrier (2) de frein.

16. Frein à disques suivant l'une des revendications précédentes, **caractérisé en ce que** le tuyau (30) est souple.

17. Frein à disques suivant l'une des revendications précédentes, **caractérisé en ce que** le tuyau (30)et/ou l'arbre (5) flexible, sont ou est muni d'une couche intermédiaire diminuant le frottement et l'usure.

18. Frein à disques suivant l'une des revendications précédentes, **caractérisé en ce que** la couche intermédiaire est sous la forme d'un manchon en matériau susceptible de glisser entre l'arbre flexible et la paroi intérieure du tuyau.

19. Frein à disques suivant l'une des revendications précédentes, **caractérisé en ce que** les roues (28, 29) de vis engrènent avec des roues dentées des dispositifs de rattrapage de jeu ou avec des disques (34) dentés axialement.

20. Frein à disques suivant l'une des revendications précédentes, **caractérisé par** un dispositif de rappel pouvant être actionné manuellement.
